# EUROPEAN PATENT APPLICATION

(11) **EP 4 361 105 A1**
(43) Date of publication of application: **01.05.2024**
(21) Application number: 23175308.8
(22) Date of filing: 25.05.2023
(51) Int. Cl.: C01G 45/12, C01G 53/00, H01M 4/505, H01M 4/525

(54) **POSITIVE ELECTRODE ACTIVE MATERIAL**

(30) Priority: 27.10.2022 KR 20220140211
(71) Applicant: ECOPRO BM CO., LTD., Cheongju-si, Chungcheongbuk-do 28116 (KR)
(72) Inventor: LIM, Ra Na, 28116 Cheongju-si, Chungcheongbuk-do (KR); JUNG, Hyun Su, 28116 Cheongju-si, Chungcheongbuk-do (KR); LIM, Kyung Min, 28116 Cheongju-si, Chungcheongbuk-do (KR); KIM, Seong Kyun, 28116 Cheongju-si, Chungcheongbuk-do (KR); PARK, Eun Hee, 28116 Cheongju-si, Chungcheongbuk-do (KR)
(74) Representative: BCKIP Part mbB

(57) **Abstract**

The present invention relates to a positive electrode active material and a lithium secondary battery including the same, and more particularly, to a bimodal-type positive electrode active material which is capable of improving the low energy density per unit volume of an overlithiated lithium manganese-based oxide, preventing the degradation of electrochemical properties of a lithium secondary battery, including rate characteristics, caused by an excess of lithium and manganese in the lithium manganese-based oxide, and particularly preventing the lifetime deterioration of a lithium secondary battery by inhibiting or mitigating the release of a transition metal from the lithium manganese-based oxide, and a lithium secondary battery including the same.

## Description

### 1. Field of the Invention

The present invention relates to a positive electrode active material and a lithium secondary battery including the same, and more particularly, to a bimodal-type positive electrode active material which is capable of improving the low energy density per unit volume of an overlithiated lithium manganese-based oxide, preventing the degradation of electrochemical properties of a lithium secondary battery, including rate characteristics, caused by an excess of lithium and manganese in the lithium manganese-based oxide, and particularly preventing the lifetime deterioration of a lithium secondary battery by inhibiting or mitigating the release of a transition metal from the lithium manganese-based oxide, and a lithium secondary battery including the same.

### 2. Discussion of Related Art

Batteries store electrical power by using materials facilitating an electrochemical reaction at a positive electrode and a negative electrode. As a representative example of such batteries, there is a lithium secondary battery storing electrical energy due to a difference in chemical potential when lithium ions are intercalated/deintercalated into/from a positive electrode and a negative electrode.

The lithium secondary battery uses materials enabling reversible intercalation/deintercalation of lithium ions as positive electrode and negative electrode active materials, and is manufactured by charging an organic electrolyte solution or a polymer electrolyte solution between the positive electrode and the negative electrode.

A representative material used as a positive electrode active material of a lithium secondary battery is a lithium composite oxide. The lithium composite oxide may be LiCoO₂, LiMn₂O₄, LiNiO₂, LiMnO₂, or an oxide in which Ni, Co, Mn or Al is complexed.

Among the positive electrode active materials, LiCoO₂ is most widely used due to excellent lifetime characteristics and charging/discharging efficiency, but it is expensive due to cobalt being a limited resource, which is used as a raw material, and thus has a disadvantage of limited price competitiveness.

Lithium manganese oxides such as LiMnO₂ and LiMn₂O₄ have advantages of excellent thermal safety and low costs, but also have problems of small capacity and poor high-temperature characteristics. In addition, while a LiNiOz-based positive electrode active material exhibits a battery characteristic such as a high discharge capacity, due to cation mixing between Li and a transition metal, it is difficult to synthesize the LiNiOz-based positive electrode active material, thereby causing a big problem in rate characteristics.

In addition, depending on the intensification of such a cation mixing, a large amount of Li by-products is generated. Since most of the Li by-products include LiOH and Li₂CO₃, they may cause gelation in preparation of a positive electrode paste, or cause gas generation according to repeated charging/discharging after the manufacture of an electrode. In addition, residual Li₂CO₃ in the Li by-product increases cell swelling to act as the cause of degrading a lifetime characteristic.

Various candidate materials for compensating for these shortcomings of conventional positive electrode active materials are being suggested.

In one example, there is on-going research to use an overlithiated lithium manganese-based oxide in which an excess of Mn among transition metals is included and a lithium content is higher than the sum of the contents of the transition metals as a positive electrode active material for a lithium secondary battery. Such an overlithiated lithium manganese-based oxide is also referred to as an overlithiated layered oxide (OLO).

Although the OLO has an advantage in that it can theoretically exhibit high capacity under a high voltage operating environment, in fact, due to an excessive amount of Mn contained in the oxide, the electric conductivity is relatively low, and thus the rate characteristic of a lithium secondary battery using OLO is low. As such, when the rate characteristic is low, there is a problem in which charge/discharge capacity and lifetime efficiency (capacity retention) are degraded during the cycling of a lithium secondary battery.

In addition, due to a high interparticle porosity in terms of the characteristics of a material, OLO has a disadvantage of a low energy density per unit volume.

To solve the above-described problems, although various studies on changing the composition of OLO have been conducted, such attempts have not yet reached the level of commercialization.

### SUMMARY OF THE INVENTION

In the lithium secondary battery market, the growth of lithium secondary batteries for electric vehicles is driving the market, and accordingly, the demand for positive electrode active materials used in lithium secondary batteries is also continuously increasing.

For example, conventionally, to ensure stability, lithium secondary batteries using LFP have mainly been used, but recently, the use of a nickel-based lithium composite oxide having a larger energy capacity per weight than LFP tends to be increasing.

In addition, recently, nickel-based lithium composite oxides mainly used as positive electrode active materials for high-capacity lithium secondary batteries essentially use three-component metal elements such as nickel, cobalt and manganese or nickel, cobalt and aluminum. However, since cobalt is not only unstable in supply, but also excessively expensive compared to other raw materials, a positive electrode active material with a new composition, which can reduce a cobalt content or exclude cobalt is needed.

Considering these circumstances, although an overlithiated lithium manganese-based oxide can meet the above-mentioned expectations of the market, there is a limitation that electrochemical properties or stability of the lithium manganese-based oxide are still insufficient to replace a commercially-available positive electrode active material such as a ternary lithium composite oxide with a nickel-cobalt-manganese (NCM) or nickel-cobalt-aluminum (NCA) composition.

For example, the disadvantage of the low energy density per unit volume of OLO due to the composition of a material (including an excess of lithium) and its structural characteristic (high interparticle porosity) has been described above.

However, the present inventors confirmed that the low energy density per unit volume of an overlithiated lithium manganese-based oxide may be improved by preparing the lithium manganese-based oxide by dividing it into small and large particles and providing a bimodal-type positive electrode active material as a mixture of the small and larger particles.

Accordingly, the present invention is directed to providing a bimodal-type positive electrode active material for improving the low energy density per unit volume of an overlithiated lithium manganese-based oxide.

In addition, the present inventors confirmed that, as a lithium manganese-based oxide is repeatedly charged/discharged, the possibility of the release of a transition metal from a particle surface is higher than that of a ternary lithium composite oxide. Particularly, Mn included in excess in the lithium manganese-based oxide is highly likely to be released from the particle surface.

When a transition metal is released from the lithium manganese-based oxide, the released transition metal may react with a liquid electrolyte on the surface of the lithium manganese-based oxide to form impurities. The impurities not only increase the surface resistance of the lithium manganese-based oxide, but become a cause of reducing the intercalation/deintercalation efficiency of lithium ions via the lithium manganese-based oxide.

In addition, the transition metal released from the lithium manganese-based oxide or the impurities formed by the reaction between the released transition metal and a liquid electrolyte may migrate to a negative electrode using the liquid electrolyte as a medium, and may be deposited on the surface of the negative electrode.

For example, side reactions with the liquid electrolyte may occur on the surface of the lithium manganese-based oxide, or Mn²⁺ included in excess in the lithium manganese-based oxide may be released into the liquid electrolyte due to the structural change (the change in crystal structure) of the lithium manganese-based oxide. The Mn²⁺ released into the liquid electrolyte may migrate to the surface of the negative electrode using the electrolyte as a medium during formation or charging/discharging to have reactions with various materials (a battery, a liquid electrolyte, an electrode, impurities, etc.) present in the battery, and as a result, impurities including Mn²⁺, an Mn metal or Mn-containing compounds (e.g., MnCO₃, MnO, MnF₂, etc.) are present on the surface of the negative electrode.

The transition metal or impurities deposited on the surface of the negative electrode may rapidly increase the resistance of the negative electrode, and such an abnormal resistance phenomenon is a typical cause of accelerating the lifetime deterioration of a lithium secondary battery.

Particularly, since the case of a lithium secondary battery using the lithium manganese-based oxide as a positive electrode active material has a higher operating voltage than a lithium secondary battery using another commercially-available ternary lithium composite oxide as a positive electrode active material, it is vulnerable to the above-described problem.

However, until now, there is no technology for resolving the release of a transition metal from the overlithiated lithium manganese-based oxide and a problem caused thereby.

As described above, compared with other types of commercialized positive electrode active materials, the conventional overlithiated lithium manganese-based oxides have disadvantages in terms of electrochemical properties and/or stability. However, the present inventors confirmed that, when a barrier layer that can control the bulk composition of the lithium manganese-based oxide, and at the same time, inhibit or mitigate the release of a transition metal from the surface of the lithium manganese-based oxide is included, the overlithiated lithium manganese-based oxide may also exhibit commercialized levels of electrochemical properties and stability.

Particularly, the present inventors confirmed that the release of a transition metal from the lithium manganese-based oxide may be inhibited or mitigated by forming the lithium manganese-based oxide as a core-shell particle having a concentration gradient of at least one transition metal constituting the lithium manganese-based oxide from the central portion to the surface portion, and allowing the content of a transition metal having a relatively lower release possibility to be higher than a different transition metal in a region corresponding to the shell.

In addition, it was confirmed by the present inventors that, when the surface of the core-shell particle, that is, the surface of the shell, is covered with a barrier layer capable of inhibiting the release of a transition metal from the core-shell particle, the release of a transition metal from lithium manganese-based oxide may be further inhibited or mitigated.

Accordingly, the present invention is directed to providing a bimodal-type positive electrode active material including small and large particles to improve the low energy density per unit volume of an overlithiated lithium manganese-based oxide, in which at least one of the small and large particles is a core-shell particle having a concentration gradient of a transition metal, and which is capable of inhibiting or mitigating the release of a transition metal from the lithium manganese-based oxide, and at the same time, improving the charge transfer and/or diffusivity (i.e., surface kinetics) of lithium ions on the surface of the lithium manganese-based oxide by allowing the content of a transition metal having a relatively lower release possibility to be higher than a different transition metal in a region corresponding to the shell.

In addition, the present invention is directed to providing a bimodal-type positive electrode active material including small and large particles to improve the low energy density per unit volume of an overlithiated lithium manganese-based oxide, in which a barrier layer is formed on at least one surface of small and large particles, thereby inhibiting or mitigating the release of a transition metal from the lithium manganese-based oxide.

Moreover, the present invention is directed to providing a lithium secondary battery that uses a positive electrode including the positive electrode active material defined in the present invention to realize high stability by preventing a decrease in electrochemical properties of a lithium secondary battery, including rate characteristics, caused by an excess of lithium and manganese in conventional OLO, and reducing side reactions between the positive electrode active material and a liquid electrolyte during high-voltage operation.

To solve the above-described technical problems, one aspect of the present invention provides a bimodal-type positive electrode active material that includes a first lithium manganese-based oxide and a second lithium manganese-based oxide, which have different average particle diameters.

In the present invention, the first lithium manganese-based oxide may be referred to as a small particle, and the second lithium manganese-based oxide may be referred to as a large particle. The first lithium manganese-based oxide and the second lithium manganese-based oxide, which constitute the bimodal-type positive electrode active material, are oxides in which a phase belonging to a C2/m space group and a phase belonging to an R3-m space group are dissolved or complexed.

Generally, in a commercially-available ternary lithium composite oxide with a nickel-cobalt-manganese (NCM) or nickel-cobalt-aluminum (NCA) composition, the phase belonging to the R3-m space group is present as a single phase, but in the overlithiated lithium manganese-based oxide defined herein, a phase belonging to a C2/m space group and a phase belonging to an R3-m space group are dissolved or complexed.

In one embodiment, the first lithium manganese-based oxide and the second lithium manganese-based oxide may each independently include at least one selected from nickel, cobalt and manganese.

The first lithium manganese-based oxide and the second lithium manganese-based oxide may each independently be represented by Formula 1 below:

[Formula 1] Li(LiₐM1ₓM2_{y})O_{2-b}X_{b}

Wherein,
M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd and Nd, and M2 does not overlap with M1,
X is a halogen that can substitute for at least some of the oxygens present in the lithium manganese-based oxide,
0<a≤0.7, 0≤b≤0.1, 0<x≤1, 0≤y<1, and 0<x+y≤1.

In another embodiment, the first lithium manganese-based oxide and the second lithium manganese-based oxide may each independently be represented by Formula 1-1 below:

[Formula 1-1] rLi₂MnO_{3-b"}X'_{b"}·(1-r)Li_{a'}M1_{x'}M2_{y'}O_{2-b'}X_{b'}

Wherein,
M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd and Nd, and M2 does not overlap with M1,
X and X' are halogens that can substitute for at least some of the oxygens present in the lithium manganese-based oxide,
0<r≤0.7, 0<a'≤1, 0≤b'≤0.1, 0≤b"≤0.1, 0<x'≤1, 0≤y'<1, and 0<x'+y'≤1.

In addition, at least one of the first lithium manganese-based oxide and the second lithium manganese-based oxide may be provided in the form of a core-shell particle in which a concentration gradient of at least one selected from nickel and manganese is formed from the central portion to the surface portion.

Here, as the content of a transition metal with relatively low release possibility is allowed to be higher than a different transition metal in a region corresponding to the shell, it is possible to reduce the possibility of a transition metal being released from the core-shell particle.

In addition, the charge-transfer and/or diffusivity (i.e., surface kinetics) of lithium ions from the surface of the core-shell particle may be improved by providing at least one of the first lithium manganese-based oxide and the second lithium manganese-based oxide in the form of a core-shell particle.

In one embodiment, a barrier layer may be present on at least a part of at least one surface of the first lithium manganese-based oxide and the second lithium manganese-based oxide. The barrier layer covering at least a part of the surface(s) of the first lithium manganese-based oxide and/or the second lithium manganese-based oxide may inhibit or mitigate the release of a transition metal from the first lithium manganese-based oxide and/or the second lithium manganese-based oxide.

The barrier layer may include an oxide including at least one selected from a metal element, a metalloid element and phosphorus (P).

Specifically, the barrier layer may include at least one selected from a first oxide represented by Formula 2 below, a second oxide represented by Formula 3 below, and a third oxide represented by Formula 4 below.

[Formula 2] Li_{c}B_{d}M3ₑO_{f}

Wherein,
M3 is at least one selected from Ni, Mn, Co, Al, Nb, Si, Ti, Zr, Ba, K, Mo, Fe, Cu, Cr, Zn, Na, Ca, Mg, Pt, Au, Eu, Sm, W, Ce, V, Ta, Sn, Hf, Gd and Nd,
0≤c≤8, 0<d≤8, 0≤e≤8, and 2≤f≤13.

[Formula 3] Li_{g}M4ₕOᵢ

Wherein,
M4 is at least one selected from Ni, Mn, Co, Al, Nb, Si, Ti, Zr, Ba, K, Mo, Fe, Cu, Cr, Zn, Na, Ca, Mg, Pt, Au, Eu, Sm, W, Ce, V, Ta, Sn, Hf, Gd and Nd,
0≤g≤8, 0≤h≤8, 2≤i≤13, and the case in which g and h are 0 at the same time is excluded.

[Formula 4] LiⱼM5ₖ(PₗOₘ)ₙ

Wherein,
M5 is at least one selected from Ni, Mn, Co, Al, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd and Nd,
0≤j≤10, 0≤k≤8, 0<l≤4, 0<m≤10, 0<n≤13, and the case in which j and k are 0 at the same time is excluded.

In addition, another aspect of the present invention provides a positive electrode including the above-described positive electrode active material.

Moreover, still another aspect of the present invention provides a lithium secondary battery using the above-described positive electrode.

### DETAILED DESCRIPTION OF EXEMPLARY EMBODIMENTS

In order to better understand the present invention, certain terms are defined herein for convenience. Unless defined otherwise herein, scientific and technical terms used herein will have meanings commonly understood by those of ordinary skill in the art. In addition, unless specifically indicated otherwise, terms in a singular form also include plural forms, and terms in a plural form should be understood to include singular forms as well.

Hereinafter, a positive electrode active material including an overlithiated lithium manganese-based oxide and a lithium secondary battery including the positive electrode active material according to some embodiments of the present invention will be described in further detail.

### Positive electrode active material

According to one aspect of the present invention, a positive electrode active material including a lithium manganese-based oxide in which a phase belonging to a C2/m space group and a phase belonging to an R3-m space group are dissolved or complexed is provided.

Here, the lithium manganese-based oxide may be classified into a first lithium manganese-based oxide as a small particle and a second lithium manganese-based oxide as a large particle based on the average particle diameter of the lithium manganese-based oxide, and the positive electrode active material defined in the present invention is a bimodal-type positive electrode active material including a first lithium manganese-based oxide as a small particle and a second lithium manganese-based oxide as a large particle.

Hereinafter, unless defined otherwise, the lithium manganese-based oxide may be understood as referring to both of the first lithium manganese-based oxide and the second lithium manganese-based oxide.

The lithium manganese-based oxide is also referred to as an overlithiated layered oxide (OLO) because the content of lithium present in the lithium manganese-based oxide is larger than the sum of the contents of different transition metals (generally, when a molar ratio of lithium to all metal elements excluding lithium in the lithium manganese-based oxide (Li/Metal molar ratio) is greater than 1.

In addition, the lithium manganese-based oxide includes at least one selected from nickel, cobalt and manganese. That is, the first lithium manganese-based oxide and the second lithium manganese-based oxide are each independently at least one selected from nickel, cobalt and manganese.

Generally, considering that the content of manganese among all metal elements except lithium is 20 mol% or less in a commercially-available ternary lithium composite oxide with a nickel-cobalt-manganese (NCM) or nickel-cobalt-aluminum (NCA) composition, the lithium manganese-based oxide has a relatively high proportion of manganese (e.g, 50 mol% or more, and preferably, 55 to 75 mol%) among all metal elements relative to the commercially-available ternary lithium composite oxide.

In addition, considering that the content of nickel among all metal elements except lithium is 60 mol% or more (in the case of a high-Ni type, 80 mol% or more) in a commercially-available ternary lithium composite oxide with a nickel-cobalt-manganese (NCM) or nickel-cobalt-aluminum (NCA) composition, the lithium manganese-based oxide has a relatively low proportion (e.g., less than 50 mol%, and preferably, 25 to 45 mol%) of nickel among all metal elements relative to the commercially-available ternary lithium composite oxide.

The Li/Metal molar ratio measured from the lithium manganese-based oxide defined herein is higher than that of the ternary lithium composite oxide such as nickel-cobalt-manganese (NCM) or nickel-cobalt-aluminum (NCA). For example, the Li/Metal molar ratio of the ternary lithium composite oxide such as nickel-cobalt-manganese (NCM) or nickel-cobalt-aluminum (NCA) has a value close to almost 1. On the other hand, the Li/Metal molar ratio of the lithium manganese-based oxide defined herein is higher than 1, and preferably 1.1 to 1.7.

In spite of the above-described difference in composition, the lithium manganese-based oxide can also serve as a composite metal oxide enabling intercalation/deintercalation of lithium ions.

In one embodiment, the first lithium manganese-based oxide and the second lithium manganese-based oxide include a secondary particle formed by aggregating a plurality of primary particles.

The primary particle may have a rod shape, an oval shape and/or an irregular shape. In addition, unless particularly intended otherwise in a preparation process, various shapes of primary particles are present in the same positive electrode active material.

The primary particle may have an average particle diameter of 0.05 to 5 µm, preferably, 0.1 to 1.0 µm, and more preferably, 0.25 to 0.75 µm. Here, the average particle diameter of the primary particle may use an average value between the length of the major axis direction and the length of the minor axis direction of the primary particle ([major axis length + minor axis length]/2).

When the average particle diameter of the primary particle is smaller than 0.05 µm, the specific surface area of the lithium manganese-based oxide (secondary particle) constituting the primary particle is relatively large. In this case, there is an increasing possibility of side reactions occurring between the lithium manganese-based oxide and a liquid electrolyte during storage or operation of a lithium secondary battery.

On the other hand, when the average particle diameter of the primary particle is larger than 5 µm, a path for lithium ion diffusion in the primary particle extends due to the excessive induction of the growth of the primary particle. When the path for lithium ion diffusion in the primary particle is excessively long, the mobility of lithium ions in the primary particle and the diffusivity of lithium ions mediated by the primary particle are degraded, which becomes a cause of increasing the resistance of the lithium manganese-based oxide (secondary particle) constituting the primary particle.

A difference between the average particle diameter of the second lithium manganese-based oxide and the average particle diameter of the first lithium manganese-based oxide may be allowed to be 3 µm or more, and preferably, 4 µm or more, thereby increasing the energy density per unit volume of a bimodal positive electrode active material.

The main peak of a particle size distribution graph (X axis: particle size (µm), Y axis: vol%) by volume for the first lithium manganese-based oxide may be in the range of 1 to 8 µm, and preferably, 2 to 7 µm. In addition, the average particle diameter calculated by the average value between a length in a major axis direction and a length in a minor axis direction of the first lithium manganese-based oxide ([major axis length + minor axis length]/2) may be 2 to 6 µm.

The main peak of a particle size distribution graph (X axis: particle size (µm), Y axis: vol%) by volume for the second lithium manganese-based oxide may be in the range of 6 to 24 µm, and preferably, 8 to 22 µm. In addition, the average particle diameter calculated by the average value between a length in a major axis direction and a length in a minor axis direction of the first lithium manganese-based oxide ([major axis length + minor axis length]/2) may be 7 to 14 µm.

In addition, to optimize the energy density per unit volume of a bimodal positive electrode active material, the first lithium manganese-based oxide and the second lithium manganese-based oxide in the positive electrode active material are preferably included in a weight ratio of 10:90 to 80:20.

The first lithium manganese-based oxide may be present while filled in a void between particles of the second lithium manganese-based oxide or may also be present while attached to the surface of the second lithium manganese-based oxide or in an aggregated form of the first lithium manganese-based oxide particles.

When the proportion of the first lithium manganese-based oxide relative to the second lithium manganese-based oxide in the positive electrode active material is excessively small, it may be difficult to sufficiently fill the first lithium manganese-based oxide in a void formed by particles of the second lithium manganese-based oxide.

On the other hand, when the proportion of the first lithium manganese-based oxide relative to the second lithium manganese-based oxide in the positive electrode active material is excessively large, the energy density per unit volume of the positive electrode active material may decrease.

Unless defined otherwise, the term "surface of the primary particle" used herein refers to the outermost surface of the primary particle exposed to the outside. Likewise, the term "surface of the secondary particle" used herein refers to the outermost surface of the secondary particle exposed to the outside. Here, the "surface of the secondary particle" formed by aggregating a plurality of primary particles corresponds to the exposed surface of the primary particle present on the surface portion of the secondary particle.

In addition, unless defined otherwise, the term "surface portion of a particle" used herein refers to a region relatively close to the "surface" of a particle, the "central portion of a particle" refers to a region relatively close to the "very center" of a particle, compared to the "surface portion." Accordingly, the "surface portion of a primary particle" refers to a region relatively close to the "surface" of the primary particle, and the "central portion of a primary particle" refers to a region relatively close to the "very center" of the primary particle compared to the "surface portion." Likewise, the "surface portion of a secondary particle" refers to a region relatively close to the "surface" of the secondary particle, and the "central portion of a secondary particle" refers to a region relatively close to the "very center" of the secondary particle compared to the "surface portion."

Here, a region excluding the "surface portion of a particle" within any particle may be defined as the "central portion of a particle."

For example, when the radius of the primary particle is r, the region in which the distance from the surface of the primary particle is 0 to 0.5r may be defined as the surface portion of the primary particle, and the region in which the distance from the very center of the primary particle is 0 to 0.5r may be defined as the central portion of the primary particle. When the radius of the primary particle is 0.5 µm, the surface portion of the primary particle may be defined as the region in which the distance from the surface of the primary particle is 0 to 0.25 µm, and the central portion of the primary particle may be defined as the region in which the distance from the very center of the primary particle is 0 to 0.25 µm.

In addition, if necessary, when the radius of the primary particle is r, the region in which the distance from the surface of the primary particle is 0 to 0.1r or 0 to 0.2r may be defined as the surface portion of the primary particle, and the region in which the distance from the very center of the primary particle is 0 to 0.2r or 0 to 0.5r may be defined as the central portion of the primary particle.

Likewise, when the radius of the secondary particle is r, the region in which the distance from the surface of the secondary particle is 0 to 0.5r may be defined as the surface portion of the secondary particle, and the region in which the distance from the very center of the secondary particle is 0 to 0.5r may be defined as the central portion of the secondary particle. When the radius of the secondary particle is 2.0 µm, the surface portion of the secondary particle may be defined as the region in which the distance from the surface of the secondary particle is 0 to 1.0 µm, and the central portion of the secondary particle may be defined as the region in which the distance from the very center of the secondary particle is 0 to 1.0 µm.

In addition, if necessary, when the radius of the secondary particle is r, the region in which the distance from the surface of the secondary particle is 0 to 0.1r or 0 to 0.2r may be defined as the surface portion of the secondary particle, and the region in which the distance from the very center of the secondary particle is 0 to 0.2r or 0 to 0.5r may be defined as the central portion of the secondary particle.

In one embodiment, the first lithium manganese-based oxide and the second lithium manganese-based oxide, which are defined herein, may each independently be an overlithiated lithium manganese-based oxide represented by Formula 1 below. The composition represented by Formula 1 below may represent the average composition reflecting the composition of a barrier layer present on at least a part of the surface of the lithium manganese-based oxide.

[Formula 1] Li(LiₐM1ₓM2_{y})O_{2-b}X_{b}

Wherein,
M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd and Nd, M2 does not overlap with M1,
X is a halogen that can substitute for at least some of the oxygens present in the lithium manganese-based oxide, 0<a≤0.7, 0≤b≤0.1, 0<x≤1, 0≤y< 1, and 0<x+y≤1.

For the type of halogen that can be used as X, refer to the periodic table, and F, Cl, Br and/or I may be used, and preferably, F may be used.

A gradient in which the proportion of at least one selected from x and y in Formula 1 changes from the surface portion to the central portion of the primary particle may be formed.

Alternatively, a gradient in which at least one selected from x and y in Formula 1 changes from the surface portion to the central portion of the secondary particle may be formed.

In addition, the overlithiated lithium manganese-based oxide represented by Formula 1 may further include a spinel phase other than the phase belonging to a C2/m space group and a phase belonging to a R3-m space group.

In another embodiment, the first lithium manganese-based oxide and the second lithium manganese-based oxide, which are defined herein, may each independently be an overlithiated lithium manganese-based oxide represented by Formula 1-1 below. The composition represented by Formula 1-1 below may represent the average composition reflecting the composition of a barrier layer present on at least a part of the surface of the lithium manganese-based oxide.

[Formula 1-1] rLi₂MnO_{3-b"}X'_{b"}·(1-r)Li_{a'}M1_{x'}M2_{y'}O_{2-b'}X_{b'}

Wherein,
M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd and Nd, M2 does not overlap with M1,
X and X' are halogens that can substitute for at least some of the oxygens present in the lithium manganese-based oxide, 0<r≤0.7, 0<a'<1, 0≤b'≤0.1, 0≤b"≤0.1, 0<x'<1, 0≤y'<1, and 0<x'+y'≤1. For the types of halogen that can be used as X and X', refer to the periodic table, and F, Cl, Br and/or I may be used, and preferably, F may be used.

In Formula 1 and Formula 1-1, when M1 is Ni, M2 may include Mn, and when M1 is Mn, M2 may include Ni. In addition, when M1 is Ni and Mn, M2 may not be present, or when present, M2 may be an element other than Ni and Mn.

That is, when M1 is Ni, M2 may include at least one selected from Co, Al, P, Nb, B, Ti, Zr, Ba, K, Mo, Si, Fe, Cu, Cr, Zn, Na, Ca, Mg, Pt, Au, Eu, Sm, W, Ce, V, Ta, Sn, Hf, Gd and Nd (preferably, at least one selected from Co, Al, P, Nb, B, Ti, Zr, Ba, K, Mo, Si and W, more preferably, at least one selected from Co, P, B, Si, Ti, Zr, and W, and even more preferably, P, B and Si), and Mn.

When M1 is Mn, M2 may include at least one selected from Co, Al, P, Nb, B, Ti, Zr, Ba, K, Mo, Si, Fe, Cu, Cr, Zn, Na, Ca, Mg, Pt, Au, Eu, Sm, W, Ce, V, Ta, Sn, Hf, Gd and Nd (preferably, at least one selected from Co, Al, P, Nb, B, Si, Ti, Zr, Ba, K, Mo and W, more preferably, at least one selected from Co, P, B, Ti, Zr, Si and W, and even more preferably, at least one selected from P, B and Si) and Ni.

When M1 is Ni and Mn, M2 may include at least one selected from Co, Al, P, Nb, B, Ti, Zr, Ba, K, Mo, Si, Fe, Cu, Cr, Zn, Na, Ca, Mg, Pt, Au, Eu, Sm, W, Ce, V, Ta, Sn, Hf, Gd and Nd, preferably, at least one selected from Co, Al, P, Nb, B, Ti, Zr, Ba, K, Mo, Si and W, more preferably, at least one selected from Co, P, B, Ti, Zr, Si and W, and even more preferably, at least one selected from P, B and Si.

The lithium manganese-based oxide represented by Formula 1 or Formula 1-1 may optionally include cobalt. When the lithium manganese-based oxide includes cobalt, the mole fraction of the cobalt relative to the number of moles of all metal elements in the lithium manganese-based oxide may be 20% or less, preferably, 15% or less, and more preferably, 10% or less. In another case, the lithium manganese-based oxide represented by Formula 1 may have a cobalt-free composition.

A Li/Metal molar ratio measured from the lithium manganese-based oxide represented by Formula 1 or Formula 1-1 may be greater than 1, and preferably, 1.1 to 1.7. It is possible to form an overlithiated lithium manganese-based oxide when the Li/Metal molar ratio measured from the lithium manganese-based oxide has a value greater than at least 1.

In addition, in order for the lithium manganese-based oxide to properly form a solid solution in which a phase belonging to a C2/m space group and a phase belonging to an R3-m space group are dissolved or complexed, and at the same time, exhibit a high capacity under a high-voltage operating environment, the Li/Metal molar ratio of the lithium manganese-based oxide is preferably 1.1 to 1.6.

In addition, to properly form a solid solution in which a phase belonging to a C2/m space group and a phase belonging to an R3-m space group are dissolved or complexed, the content of manganese among all metal elements except lithium in the lithium manganese-based oxide represented by Formula 1 or Formula 1-1 is preferably 50 mol% or more.

In order for the lithium manganese-based oxide to have the characteristics of OLO exhibiting a high capacity under a high-voltage operating environment, the content of manganese among all metal elements except lithium, present in the lithium manganese-based oxide, is more preferably, 50 mol% or more and less than 80 mol%, and even more preferably, 55 to 75 mol%.

When the content of manganese in the lithium manganese-based oxide is more than 80 mol%, a phase transition may occur due to the migration of a transition metal (particularly, manganese) in the lithium manganese-based oxide during formation and/or operation of a lithium secondary battery. Such a phase transition forms a spinel phase, and the spinel phase acting as an impurity in the lithium manganese-based oxide may induce a decrease in charge/discharge capacities or voltage decay during the cycling of a lithium secondary battery.

To properly form a solid solution in which the phase belonging to the C2/m space group and the phase belonging to the R3-m space group are dissolved or complexed, the content of nickel among all metal elements except lithium present in the lithium manganese-based oxide represented by Formula 1 or Formula 1-1, is preferably less than 50 mol%.

When the content of nickel in the lithium manganese-based oxide is 50 mol% or more, since it is difficult to sufficiently form the C2/m phase, or the phase belonging to the C2/m space group and the phase belonging to the R3-m space group do not sufficiently form a solid solution, phase separation may be caused during formation and/or operation of a lithium secondary battery.

When the first lithium manganese-based oxide or the second lithium manganese-based oxide is a core-shell particle having a concentration gradient of at least one selected from nickel and manganese from the central portion (core) to the surface portion (shell) to sufficiently have nickel on the surface of the core-shell particle, the content of nickel in the core-shell particle is preferably 25 mol% to 45 mol%.

Generally, in a commercially-available ternary lithium composite oxide with a nickel-cobalt-manganese (NCM) or nickel-cobalt-aluminum (NCA) composition, the phase belonging to the R3-m space group is present as a single phase.

On the other hand, the overlithiated lithium manganese-based oxide represented by Formula 1 or Formula 1-1 is present as a composite oxide in which an oxide of the phase belonging to the C2/m space group (hereinafter, referred to as "C2/m phase") represented by rLi₂MnO₃ and an oxide of the phase belonging to the R3-m space group (hereinafter, referred to as "R3-m phase") represented by (1-r)LiₐM1ₓM2_{y}O_{2-b}X_{b} are dissolved or complexed. For example, the lithium manganese-based oxide may be present in a state in which the C2/m-phase oxide and the R3-m-phase oxide form a solid solution.

Here, a composite oxide in which the phase belonging to the C2/m space group and the phase belonging to the R3-m space group are simply physically and/or chemically bonded or attached does not correspond to the solid solution defined therein.

For example, a composite oxide having the phase belonging to the C2/m space group whose surface is coated with a metal oxide with the phase belonging to the R3-m space group by mixing a metal oxide having the phase belonging to the C2/m space group and the metal oxide with the phase belonging to the R3-m space group does not correspond to the solid solution defined herein.

In the lithium manganese-based oxide represented by Formula 1-1, when r is more than 0.7, since the proportion of Li₂MnO₃, which is a C2/m phase oxide, in the lithium manganese-based oxide is excessively large, the content of manganese in the positive electrode active material is excessively high, which may lower the discharge capacity. That is, to improve surface kinetics by sufficiently activating a C2/m-phase oxide with relatively high resistance in the lithium manganese-based oxide, the R3-m phase oxide is preferably present in a predetermined proportion or more.

As described above, at least one of the first lithium manganese-based oxide and the second lithium manganese-based oxide may be a core-shell particle having a concentration gradient of at least one selected from nickel and manganese from the central portion (core) to the surface portion (shell). Here, the release of a transition metal from the core-shell particle may be inhibited or mitigated by making the content of a transition metal with a relatively low release possibility higher than a different transition metal in a region corresponding to the shell.

In addition, the charge transfer and/or diffusivity (i.e., surface kinetics) of lithium ions from the surface of the core-shell particle may be improved by providing at least one of the first lithium manganese-based oxide and the second lithium manganese-based oxide in the form of a core-shell particle.

When the concentrations of transition metals present in the shell (or surface portion) and the core (or central portion) of any particle are different, the particle may be referred to as a core-shell particle. That is, the lithium manganese-based oxide is a core-shell particle, the average compositions of all metal elements constituting the lithium manganese-based oxide in the core and the shell may be different. Accordingly, the proportions of the phase belonging to the C2/m space group and the phase belonging to the R3-m space group in the core may be different from those in the shell.

The shell may occupy at least a part of the surface of the core. That is, the shell may be present on a part of the surface of the core, or also occupy the entire surface of the core.

In the present invention, when the number of moles of all metal elements in the lithium manganese-based oxide is M¹, and the number of moles of nickel is defined as M², M²/M¹ calculated from the average composition of all metal elements in the core of the lithium manganese-based oxide may be different from M²/M¹ calculated from the average composition of all metal elements in the shell of the lithium manganese-based oxide.

In an overlithiated lithium manganese-based oxide including an excess of Mn, it is well known that a lithium-cobalt oxide or a ternary lithium composite oxide with a nickel-cobalt-manganese (NCM) or nickel-cobalt-aluminum (NCA) composition, in which an excess of Ni is relatively included, has low electrical conductivity. In addition, there is a problem that the higher the Mn content, the lower the electrical conductivity of the ternary lithium composite oxide.

Various reactions occur on the surfaces of the above-described various types of positive electrode active materials, and as the Mn content in the positive electrode active material increases, the charge transfer and/or diffusion of lithium ions on the surfaces is(are) hindered, and this phenomenon can be referred to as a decrease in surface kinetics or reaction kinetics in the surface.

As described above, the bimodal-type positive electrode active material defined herein may improve surface kinetics by providing at least one of the first lithium manganese-based oxide and the second lithium manganese-based oxide in the form of a core-shell particle having a concentration gradient of a transition metal between the core and shell.

In one embodiment, the first lithium manganese-based oxide may be a core-shell particle having a concentration gradient of at least one selected from nickel and manganese from the central portion (core) to the surface portion (shell).

Here, the second lithium manganese-based oxide may be a particle that has constant concentrations of nickel and manganese in a particle (also referred to as a bulk or bulk particle), or has a concentration gradient with a smaller slope than that shown in the first lithium manganese-based oxide. Here, that the concentrations of nickel and manganese in a particle are constant means that the concentration of nickel or manganese may partially increase or decrease in any region of the particle, but there is no tendency for the concentration of nickel or manganese to increase or decrease from the central portion (core) to the surface portion (shell) of the particle.

The first lithium manganese-based oxide in the bimodal-type positive electrode active material is present while relatively evenly dispersed, and the specific surface area of the first lithium manganese-based oxide is larger than that of the second lithium manganese-based oxide. Accordingly, only selectively providing the first lithium manganese-based oxide as a core-shell particle can contribute to improving the overall surface kinetics of the bimodal-type positive electrode active material.

In addition, since it is difficult to realize an overall concentration gradient in the second lithium manganese-based oxide larger than the first lithium manganese-based oxide, the kinetic improving effect that can be obtained by applying the concentration gradient to the first lithium manganese-based oxide may be difficult to expect from the second lithium manganese-based oxide.

Accordingly, as the first lithium manganese-based oxide selectively in the bimodal-type positive electrode active material is provided as a core-shell particle having a concentration gradient, the manganese content (mol%) with respect to the all transition metals in the first lithium manganese-based oxide may be smaller than that of the second lithium manganese-based oxide.

In addition, the manganese content (mol%) with respect to all transition metals in at least the surface portion of the first lithium manganese-based oxide may be adjusted to be smaller than that of the second lithium manganese-based oxide.

Meanwhile, the core-shell particle may be provided as a primary particle and/or a secondary particle.

In one embodiment, the primary particle may be a core-shell particle having a concentration gradient of at least one transition metal from the central portion to the surface portion of the primary particle. Accordingly, the first lithium manganese-based oxide and/or the second lithium manganese-based oxide, present in the form of the secondary particle, may be an aggregate of the primary particles present as the core-shell particle defined herein.

When the primary particle is present as a core-shell particle having a concentration gradient of at least one transition metal from the core to the shell of the primary particle, the surface kinetics of the primary particles and the secondary particle formed by aggregating the primary particles may be improved.

For example, the primary particle may have a concentration gradient of at least one selected from nickel and manganese from the core to the shell. More specifically, the primary particle may have a concentration gradient in which the nickel concentration increases, while the manganese concentration decreases, from the core to the shell.

In addition, when the primary particle is provided as the core-shell particle defined herein, a rapid change in concentration of a metal element between the core and the shell of the primary particle may be reduced. As the rapid change in concentration of a metal element in the primary particle is prevented, it is possible to prevent the instability of the crystal structure of the primary particle.

When the region in which the concentration gradient of a transition metal in the primary particle present as the above-described core-shell particle is referred to as a shell of the primary particle, the shell may have an average thickness of 0.1 nm to 2 µm, and preferably, 50 nm to 1 µm. When the thickness of the shell in the primary particle is smaller than 0.1 nm, it may be difficult to sufficiently improve the surface kinetics of the primary particle. In contrast, when the thickness of the shell in the primary particle is larger than 2 µm, it may be disadvantageous for high capacity exhibited under a high-voltage operating environment, which is one of the advantages of the lithium manganese-based oxide. The thickness of the shell of the primary particle may vary according to the average particle diameter of the primary particle.

In another embodiment, the secondary particle may be a core-shell particle having a concentration gradient of at least one transition metal from the central portion to the surface portion of the secondary particle.

For example, the secondary particle may have a concentration gradient of at least one selected from nickel and manganese from the core to the shell. More specifically, the secondary particle may have a concentration gradient in which a nickel concentration increases, while a manganese concentration decreases, from the core to the shell.

In the secondary particle present as the above-described core-shell particle, when the region having a concentration gradient of a transition metal is referred to as a shell of the secondary particle, the shell may have an average thickness of 0.1 nm to 5 µm, and preferably, 100 nm to 2 µm. When the thickness of the shell of the secondary particle is smaller than 0.1 nm, it may be difficult to sufficiently improve the surface kinetics of the secondary particle. In contrast, when the thickness of the shell of the secondary particle is larger than 5 µm, it may be disadvantageous for high capacity exhibited under a high-voltage operating environment, which is one of the advantages of the lithium manganese-based oxide. The thickness of the shell of the secondary particle may be changed depending on whether the secondary particle is a small or large particle.

The above-described concentration gradient present in the primary and/or secondary particle(s) may inhibit and/or mitigate a phase transition occurring due to migration in an unintended direction of a transition metal in particles.

In addition, when the content of a transition metal with a relatively less release possibility in the region corresponding to the shell is larger than that of another transition metal, the release of a transition metal from the lithium manganese-based oxide may be inhibited or mitigated. As the release of a transition metal from the lithium manganese-based oxide is inhibited or mitigated, the formation of impurities by a reaction between the transition metal released on the surface and a liquid electrolyte may be prevented.

When the surface of the core-shell particle defined herein, that is, the surface of the shell is covered with a barrier layer capable of inhibiting or mitigating the release of a transition metal from the core-shell particle, the release of the transition metal from the lithium manganese-based oxide may be further inhibited or mitigated.

When the secondary particle is present as a core-shell particle, the barrier layer may cover at least a part of the surface of the secondary particle, thereby inhibiting or mitigating the release of the transition metal from the secondary particle to the outside. In addition, the barrier layer may cover the surface of the secondary particle, thereby preventing side reactions between the surface of the secondary particle and a liquid electrolyte.

When the barrier layer covers a part of the surface of the secondary particle, the barrier layer may be present in the form of an island. That is, although the barrier layer covers at least a part of the surface of the secondary particle in the form of an island, the release of a transition metal through the region covered by the barrier layer may be inhibited or mitigated. Accordingly, that the barrier layer is present on the surface of the secondary particle has to be distinguished from that the lithium manganese-based oxide and a different type of oxide are simply dispersed on the surface of the secondary particle.

In addition, a grain boundary is defined between adjacent primary particles in the secondary particle, and the barrier layer may be present in a diffused state from the surface portion to the central portion of the secondary particle along the grain boundary. As the barrier layer is diffused toward the central portion of the secondary particle, elements mainly included in the barrier layer may have a concentration gradient that decreases from the surface portion to the central portion of the secondary particle.

As the barrier layer has a gradient formed from the surface portion to the central portion of the secondary particle, the release of a transition metal mainly from the surface portion of the secondary particle may be effectively inhibited or mitigated.

A part of the elements mainly included in the barrier layer may be doped into the primary and/or secondary particles.

The average thickness of the barrier layer that covers the surface of the secondary particle is preferably 0.1 nm to 1 µm. In addition, the average thickness of the barrier layer may be changed depending on whether the secondary particle is a small or large particle.

When the average thickness of the barrier layer that covers the secondary particle is smaller than 0.1 nm, it may be difficult to sufficiently inhibit the release of a transition metal from the secondary particle. In contrast, the average thickness of the barrier that covers the secondary particle is larger than 1 µm, there is a possibility that the surface kinetics of the secondary particle may decrease, or the electrical conductivity of the secondary particle may decrease.

When the primary particle is present as a core-shell particle, the barrier layer covers at least a part of the surface of the primary particle, thereby inhibiting or mitigating the release of a transition metal from the primary particle to the outside. In addition, as the barrier layer covers the surface of the primary particle, side reactions between the surface of the primary particle and a liquid electrolyte may be prevented. Here, as the barrier layer covers the surface of the primary particle that is present in the surface portion of the secondary particle, at least a part of the surface of the secondary particle may be covered. When the barrier layer covers a part of the surface(s) of the primary and/or secondary particle(s), the barrier layer may be present in the form of an island.

The average thickness of the barrier layer that covers the surface of the primary particle is preferably 0.1 nm to 1 µm.

When the average thickness of the barrier layer covering the primary particle is smaller than 0.1 nm, it may be difficult to sufficiently inhibit the release of a transition metal from the primary particle. In contrast, when the average thickness of the barrier layer covering the primary particle is larger than 1 µm, there is a possibility that the surface kinetics of the primary particle may decrease, or the electrical conductivity of the secondary particle may decrease.

In one embodiment, a barrier layer may be present on at least a part of the surface of at least one of the first lithium manganese-based oxide and the second lithium manganese-based oxide. Accordingly, the barrier layer may inhibit or mitigate the release of a transition metal from the first lithium manganese-based oxide and/or the second lithium manganese-based oxide. To inhibit or mitigate the release of a transition metal from the first lithium manganese-based oxide and the second lithium manganese-based oxide, the barrier layer may be present on both the first lithium manganese-based oxide and the second lithium manganese-based oxide.

The barrier layer may include an oxide including at least one selected from a metal element, a metalloid element, and phosphorus (P).

In one embodiment, the barrier layer may include a first oxide represented by Formula 2 below.

[Formula 2] Li_{c}B_{d}M3ₑO_{f}

Wherein, M3 is at least one selected from Ni, Mn, Co, Al, Nb, Si, Ti, Zr, Ba, K, Mo, Fe, Cu, Cr, Zn, Na, Ca, Mg, Pt, Au, Eu, Sm, W, Ce, V, Ta, Sn, Hf, Gd and Nd, 0≤c≤8, 0<d≤8, 0≤e≤8, and 2≤f≤13.

When the first oxide represented by Formula 2 is a borate-based compound or a lithium borate (LBO)-base compound, non-limiting examples of the first oxide include B₂O₃, LizO-B₂O₃, Li₃BO₃, Li₂B₄O₇, Li₂B₂O₇, and Li₂B₈O₁₃. In addition, the first oxide may have a composition in which the above-mentioned borate-based compound or LBO-based compound is optionally doped with M3, which is a different type of element.

Here, due to the diffusion and/or doping of the first oxide included in the barrier layer, a gradient in which the concentration of at least one selected from B and M3 decreases from the barrier layer to the core of the lithium manganese-based oxide may be formed.

Such a concentration gradient serves as a path for lithium-ion migration in the primary particle and between the primary particles, and thus the transport/diffusion efficiency of lithium ions mediated by the primary particle may be improved.

In another embodiment, the barrier layer may further include a second oxide represented by Formula 3 below.

[Formula 3] Li_{g}M4ₕOᵢ

Wherein, M4 is at least one selected from Ni, Mn, Co, Al, Nb, Si, Ti, Zr, Ba, K, Mo, Fe, Cu, Cr, Zn, Na, Ca, Mg, Pt, Au, Eu, Sm, W, Ce, V, Ta, Sn, Hf, Gd and Nd, 0≤g≤8, 0≤h≤8, 2≤i≤13, and the case in which g and h are 0 at the same time is excluded.

Non-limiting examples of the second oxide represented by Formula 3 include Li_{g}ZrₕOᵢ, Li_{g}TiₕOᵢ, Li_{g}NiₕOᵢ, Li_{g}NbₕOᵢ, Li_{g}CoₕOᵢ, Li_{g}SiₕOᵢ, Li_{g}AlₕOᵢ, CoₕOᵢ, MnₕOᵢ, AlₕOᵢ, SiₕOᵢ, ZrₕOᵢ, and TiₕOᵢ.

Here, due to the diffusion and/or doping of the second oxide included in the barrier layer, a gradient in which the concentration of M4 decreases from the barrier layer to the core of the lithium manganese-based oxide may be formed.

In still another embodiment, the barrier layer may include a third oxide represented by Formula 4 below.

[Formula 4] LiⱼM5ₖ(PₗOₘ)ₙ

Wherein, M5 is at least one selected from Ni, Mn, Co, Al, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd and Nd, 0≤j≤10, 0≤k≤8, 0<l≤4, 0<m≤10, 0<n≤13, and the case in which j and k are 0 at the same time is excluded.

Non-limiting examples of the third oxide represented by Formula 4 include Liⱼ (PₗOₘ)ₙ, LiⱼAlₖ(PₗOₘ)ₙ, Alₖ(PₗOₘ)ₙ, (PₗOₘ)ₙ, LiⱼMnₖ(PₗOₘ)ₙ, Mnₖ(PₗOₘ)ₙ, LiⱼNiₖ(PₗOₘ)ₙ, and Niₖ(PₗOₘ)ₙ.

Here, due to the diffusion and/or doping of the third oxide included in the barrier layer, a gradient in which the concentration of at least one selected from M5 and P decreases from the barrier layer to the core of the lithium manganese-based oxide may be formed.

It is known that a decrease in charging/discharging capacity or voltage decay during the cycling of a lithium secondary battery using OLO is caused by a phase transition caused by the migration of a transition metal in the lithium manganese-based oxide. For example, when a transition metal in a lithium manganese-based oxide having a layered crystal structure migrates in an unintended direction to induce a phase transition, a spinel or a crystal structure similar thereto may be generated entirely and/or partially in the lithium manganese-based oxide.

However, other than the spinel phase formed by the phase transition caused by the migration of a transition metal in the lithium manganese-based oxide, when a spinel phase is formed on the surface of the primary particle and/or the secondary particle, as well as inducing the crystal growth or particle growth of the primary particles constituting the lithium manganese-based oxide, such a spinel phase may not only contribute to the surface stabilization of the lithium manganese-based oxide, but also may serve as a 2D and/or 3D path through which lithium ions in the lithium manganese-based oxide diffuse.

Accordingly, since there is a spinel-phase compound present in the barrier layer that is present to inhibit the release of a transition metal from the primary particle and/or the secondary particle, even when the surface of the primary particle and/or the secondary particle is covered with the barrier layer, the lithium manganese-based oxide may exhibit an appropriate level of electrical conductivity.

In addition, if needed, the barrier layer may include at least two oxides selected from the first to third oxides in order to effectively inhibit or mitigate the release of a transition metal from the lithium manganese-based oxide, and at the same time, too improve the surface kinetics of the lithium manganese-based oxide.

In addition, the main components of the barrier layer calculated based on all metal elements excluding lithium, present in the lithium manganese-based oxide, is preferably more than 0.1 mol% and less than 5 mol%. Here, when there is the first oxide in the barrier layer, the main components of the barrier layer are boron (B) and M3, and when there is the second oxide in the barrier layer, the main component of the barrier layer is M4, and when there is the third oxide in the barrier layer, the main component of the barrier layer is M5. In addition, when there is any combination of the first to third oxides in the barrier layer, the main component of the barrier layer is selected from boron (B), M3, M4 and M5.

That the content of the main component of the barrier layer is smaller than 0.1 mol% means that a barrier layer for inhibiting or mitigating the release of a transition metal is insufficiently formed on the surface of the lithium manganese-based oxide. Accordingly, it is difficult to effectively prevent acceleration of the lifetime deterioration of a lithium secondary battery due to the deposition of impurities on a positive electrode and/or a negative electrode by a transition metal released from the lithium manganese-based oxide.

On the other hand, when the content of the main components of the barrier layer is 5 mol% or more, the surface kinetics of the lithium manganese-based oxide may decrease and thus electrochemical properties may decrease, compared to when the main components of the barrier layer are present at appropriate contents.

In addition, in order to effectively inhibit or mitigate the release of a transition metal from the surface of the lithium manganese-based oxide within a range in which the surface kinetics of the lithium manganese-based oxide are not degraded, the contents of the main components of the barrier layer calculated based on all metal elements excluding lithium, present in the lithium manganese-based oxide, is more preferably 1±0.1 mol% or more and 3±0.1 mol% or less.

### Lithium secondary battery

According to another embodiment of the present invention, a positive electrode including a positive electrode current collector and a positive electrode active material layer formed on the positive electrode current collector may be provided. Here, the positive electrode active material layer may include a lithium manganese-based oxide according to one of the various embodiments of the present invention, described above, as a positive electrode active material.

Accordingly, a detailed description of the lithium manganese-based oxide will be omitted, and only the remaining components not described above will be described below. In addition, hereinafter, the above-described lithium manganese-based oxide is referred to as a positive electrode active material for convenience.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and a binder included optionally as needed.

Here, the positive electrode active material is included at 80 to 99 wt%, and specifically, 85 to 98.5 wt% with respect to the total weight of the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of the positive electrode active material layer.

The binder serves to improve attachment between particles of the positive electrode active material and the adhesive strength between the positive electrode active material and a current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to prepare a positive electrode.

In addition, in another exemplary embodiment, the positive electrode may be prepared by casting the positive electrode slurry composition on a separate support, and laminating a film obtained by delamination from the support on the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator film and a liquid electrolyte, which are interposed between the positive electrode and the negative electrode. Here, since the positive electrode is the same as described above, for convenience, detailed description for the positive electrode will be omitted, and other components which have not been described below will be described in detail.

The lithium secondary battery may further include a battery case accommodating an electrode assembly of the positive electrode, the negative electrode and the separator film, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and a binder optionally included as needed.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as SiO_{β} (0<β<2), SnOz, vanadium oxide, or lithium vanadium oxide; or a composite including the metallic compound and the carbonaceous material such as a Si-C composite or a Sn-C composite, and any one or a mixture of two or more thereof may be used. In addition, as the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of the negative electrode active material layer.

The binder is a component aiding bonding between a conductive material, an active material and a current collector, and may be generally added at 0.1 to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber, nitrile-butadiene rubber, fluorine rubber, and various copolymers thereof.

The conductive material is a component for further improving conductivity of the negative electrode active material, and may be added at 10 wt% or less, and preferably, 5 wt% or less with respect to the total weight of the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a metal powder such as fluorinated carbon, aluminum, or nickel powder; a conductive whisker such as zinc oxide or potassium titanate; a conductive metal oxide such as titanium oxide; or a conductive material such as a polyphenylene derivative.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, a separator film is not particularly limited as long as it is generally used in a lithium secondary battery to separate a negative electrode from a positive electrode and provide a diffusion path for lithium ions, and particularly, the separator film has a low resistance to ion mobility of a liquid electrolyte and an excellent electrolyte solution impregnation ability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator film including a ceramic component or a polymer material may be used to ensure thermal resistance or mechanical strength, and may be optionally used in a single- or multi-layered structure.

In addition, the electrolyte used in the present invention may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the transfer of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charging/discharging performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1: 1 to 1:9, the electrolyte solution may exhibit excellent performance.

The lithium salt is not particularly limited as long as it is a compound capable of providing a lithium ion used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0M. When the concentration of the lithium salt is included in the above-mentioned range, the electrolyte has suitable conductivity and viscosity and thus can exhibit excellent electrolytic performance. Therefore, lithium ions can effectively migrate.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte is used.

As a material for a sulfide-based solid electrolyte, a solid electrolyte containing Li, an X element (here, X is at least one selected from P, As, Sb, Si, Ge, Sn, B, Al, Ga and In) and S may be used. Examples of the sulfide-based solid electrolyte material may include Li₂S-P₂S₅, Li₂S-P₂S-LiX (here, X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (here, m and n are integers, and Z is Ge, Zn or Ga), Li₂S-GeS₂, Li₂S-SiS₂-Li₃PO₄, and Li₂S-SiS₂-LiₚMO_{q} (here, p and q are integers, and M is P, Si, Ge, B, Al, Ga or In).

A solid electrolyte, and preferably, a sulfide-based solid electrolyte may be amorphous, crystalline, or a state in which an amorphous phase and crystalline phase are mixed.

Materials for an oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between a positive electrode and a negative electrode. In addition, the solid electrolyte may be partially included in a positive electrode active material layer of the positive electrode independent of the solid electrolyte layer, or the solid electrolyte may be partially included in a negative electrode active material of the negative electrode independent of the solid electrolyte layer.

To enhance lifetime characteristics of the battery, inhibit a decrease in battery capacity, and enhance discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present invention is not particularly limited, but may be a cylindrical, prismatic, pouch or coin type using a can. In addition, the lithium secondary battery may be used in a battery cell that is not only used as a power source of a small device, but also preferably used as a unit battery for a medium-to-large battery module including a plurality of battery cells.

According to still another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to exemplify the present invention, and thus the scope of the present invention will not be construed not to be limited by these examples.

### Preparation Example 1. Preparation of positive electrode active material

### Preparation Example 1-1. Preparation of first lithium manganese-based oxide (A-1)

### (a) Preparation of precursor

An aqueous solution in which NiSO₄·6H₂O and MnSO₄·H₂O were mixed in a molar ratio of 40:60, NaOH and NH₄OH was added to a reactor and stirred. The temperature in the reactor was maintained at 45 °C, and a N₂ gas was introduced into the reactor to perform a precursor synthesis reaction. After the reaction was completed, washing and dehydration were performed, thereby obtaining a hydroxide precursor (average particle diameter: 3.0 µm) with the composition of Ni_{0.4}Mn_{0.6}(OH)₂.

### (b) First thermal treatment

An oxide-type precursor was obtained by raising the temperature of a calcination furnace with an Oz atmosphere at a rate of 2 °C/min, thermally treating the hydroxide precursor obtained in (a) for 5 hours while maintaining the temperature at 550 °C and performing furnace cooling.

### (c) Second thermal treatment

A mixture was prepared by mixing the oxide-type precursor obtained in (b) and LiOH (Li/Metal molar ratio = 1.25) as a lithium raw material.

Subsequently, a first lithium manganese-based oxide (A-1) was obtained by raising the temperature of a calcination furnace with an Oz atmosphere at a rate of 2 °C/min, maintaining the temperature at 900 °C, thermally treating the mixture for 8 hours, and performing furnace cooling.

### Preparation Example 1-2. Preparation of first lithium manganese-based oxide (A-2)

### (a) Preparation of precursor

An aqueous solution in which NiSO₄·6H₂O and MnSO₄·H₂O were mixed in a molar ratio of 40:60, NaOH and NH₄OH were added to a reactor and stirred. The temperature in the reactor was maintained at 45 °C, and a N₂ gas was introduced into the reactor to perform a precursor synthesis reaction. After the reaction was completed, washing and dehydration were performed, thereby obtaining a hydroxide precursor (average particle diameter: 3.0 µm) with the composition of Ni_{0.4}Mn_{0.6}(OH)₂.

### (b) Precursor coating

A NiSO₄·6H₂O aqueous solution, NaOH and NH₄OH were introduced into a reactor while stirring the precursor obtained in (a). Here, NiSO₄·6H₂O was weighed to be 5 mol% and then added. After the reaction was completed, the resulting mixture was washed and dehydrated, and then dried at 150 °C for 14 hours, thereby obtaining a coated precursor.

### (c) First thermal treatment

An oxide-type precursor was obtained by raising the temperature of a calcination furnace with an Oz atmosphere at a rate of 2 °C/min, thermally treating the hydroxide precursor obtained in (b) for 5 hours while maintaining the temperature at 550 °C, and performing furnace cooling.

### (d) Second thermal treatment

A mixture was prepared by mixing the oxide-type precursor obtained in (c) and LiOH (Li/Metal molar ratio = 1.25) as a lithium raw material.

Subsequently, a first lithium manganese-based oxide (A-2) was obtained by raising the temperature of a calcination furnace with an Oz atmosphere at a rate of 2 °C/min, maintaining the temperature at 900 °C, thermally treating the mixture for 8 hours, and performing furnace cooling.

As a result of TEM/EDS analysis of the first lithium manganese-based oxide (A-2), it can be confirmed that a gradient in which the concentration of Ni increased from the central portion to the surface portion and the concentration of Mn decreased was formed by performing the precursor coating with Ni in (b).

### Preparation Example 1-3. Preparation of first lithium manganese-based oxide (A-3)

### (a) Preparation of precursor

An aqueous solution in which NiSO₄·6H₂O and MnSO₄·H₂O were mixed in a molar ratio of 40:60, NaOH and NH₄OH were added to a reactor and stirred. The temperature in the reactor was maintained at 45 °C, and a N₂ gas was introduced into the reactor to perform a precursor synthesis reaction. After the reaction was completed, washing and dehydration were performed, thereby obtaining a hydroxide precursor (average particle diameter: 3.0 µm) with the composition of Ni_{0.4}Mn_{0.6}(OH)₂.

### (b) Precursor coating

A NiSO₄·6H₂O aqueous solution, NaOH and NH₄OH were introduced into a reactor while stirring the precursor obtained in (a). Here, NiSO₄·6H₂O was weighed to be 5 mol% and then added. After the reaction was completed, the resulting mixture was washed and dehydrated, and then dried at 150 °C for 14 hours, thereby obtaining a coated precursor.

### (c) First thermal treatment

An oxide-type precursor was obtained by raising the temperature of a calcination furnace with an Oz atmosphere at a rate of 2 °C/min, thermally treating the hydroxide precursor obtained in (b) for 5 hours while maintaining the temperature at 550 °C, and performing furnace cooling.

### (d) Second thermal treatment

A mixture was prepared by mixing the oxide-type precursor obtained in (c) and LiOH (Li/Metal molar ratio = 1.25) as a lithium raw material.

Subsequently, an overlithiated lithium manganese-based oxide was obtained by raising the temperature of a calcination furnace with an Oz atmosphere at a rate of 2 °C/min, maintaining the temperature at 900 °C, thermally treating the mixture for 8 hours, and performing furnace cooling.

As a result of TEM/EDS analysis of the first lithium manganese-based oxide (A-2), it can be confirmed that a gradient in which the concentration of Ni increased from the central portion to the surface portion and the concentration of Mn decreased was formed by performing the precursor coating with Ni in (b).

### (e) Third thermal treatment (Formation of barrier layer)

A first lithium manganese-based oxide (A-3) in which a barrier layer including a B-containing compound is formed on a surface was obtained by mixing the lithium manganese-based oxide obtained in (d) and H₃BO₃ weighed to have a boron content of 2.0 mol% based on metal elements excluding lithium in the lithium manganese-based oxide, thermally treating the resulting mixture in a calcination furnace whose temperature was raised to 400 °C at 4.4 °C/min while maintaining an Oz atmosphere, and performing distribution and disintegration.

### Preparation Example 1-4. Preparation of second lithium manganese-based oxide (B-1)

### (a) Preparation of precursor

An aqueous solution in which NiSO₄·6H₂O and MnSO₄·H₂O were mixed in a molar ratio of 40:60, NaOH and NH₄OH were added to a reactor and stirred. The temperature in the reactor was maintained at 45 °C, and a N₂ gas was introduced into the reactor to perform a precursor synthesis reaction. After the reaction was completed, washing and dehydration were performed, thereby obtaining a hydroxide precursor (average particle diameter: 12.0 µm) with the composition of Ni_{0.4}Mn_{0.6}(OH)₂.

### (b) First thermal treatment

An oxide-type precursor was obtained by raising the temperature of a calcination furnace with an Oz atmosphere at a rate of 2 °C/min, thermally treating the hydroxide precursor obtained in (a) for 5 hours while maintaining the temperature at 550 °C, and performing furnace cooling.

### (c) Second thermal treatment

A mixture was prepared by mixing the oxide-type precursor obtained in (c) and LiOH (Li/Metal molar ratio = 1.25) as a lithium raw material.

Subsequently, a second lithium manganese-based oxide (B-1) was obtained by raising the temperature of a calcination furnace with an Oz atmosphere at a rate of 2 °C/min, maintaining the temperature at 900 °C, thermally treating the mixture for 8 hours, and performing furnace cooling.

### Preparation Example 1-5. Preparation of second lithium manganese-based oxide (B-2)

### (a) Preparation of precursor

The temperature in the reactor was maintained at 45 °C, and a N₂ gas was introduced into the reactor to perform a precursor synthesis reaction. After the reaction was completed, washing and dehydration were performed, thereby obtaining a hydroxide precursor (average particle diameter: 12.0 µm) with the composition of Ni_{0.4}Mn_{0.6}(OH)₂.

### (b) First thermal treatment

An oxide-type precursor was obtained by raising the temperature of a calcination furnace with an Oz atmosphere at a rate of 2 °C/min, thermally treating the hydroxide precursor obtained in (a) for 5 hours while maintaining the temperature at 550 °C, and performing furnace cooling.

### (c) Second thermal treatment

A mixture was prepared by mixing the oxide-type precursor obtained in (b) and LiOH (Li/Metal molar ratio = 1.25) as a lithium raw material.

Subsequently, a lithium manganese-based oxide was obtained by raising the temperature of a calcination furnace with an Oz atmosphere at a rate of 2 °C/min, maintaining the temperature at 900 °C, thermally treating the mixture for 8 hours, and performing furnace cooling.

### (d) Third thermal treatment (Formation of barrier layer)

A second lithium manganese-based oxide (B-2) in which a barrier layer including a B-containing compound is formed on a surface was obtained by mixing the lithium manganese-based oxide obtained in (c) and H₃BO₃ weighed to have a boron content of 2.0 mol% based on metal elements excluding lithium in the lithium manganese-based oxide, thermally treating the resulting mixture in a calcination furnace whose temperature was raised to 400 °C at 4.4 °C/min while maintaining an Oz atmosphere, and performing distribution and disintegration.

### Preparation Example 2. Preparation of positive electrode active material

A positive electrode active material was prepared by mixing the first lithium manganese-based oxide prepared and a second lithium manganese-based oxide according to Preparation Example 1 in a weight ratio listed in Table 1 below.

**[Table 1]**

| Classification | First lithium manganese-based oxide | | | Second lithium manganese-based oxide | |
|---|---|---|---|---|---|
| | A-1 (wt%) | A-2 (wt%) | A-3 (wt%) | B-1 (wt%) | B-2 (wt%) |
| Comparative Example 1 | 100 | - | - | - | - |
| Comparative Example 2 | - | - | - | 100 | - |
| Example 1 | 40 | - | - | 60 | - |
| Example 2 | - | 40 | - | 60 | - |
| Example 3 | - | - | 40 | 60 | - |
| Example 4 | 40 | - | - | - | 60 |
| Example 5 | - | 40 | - | - | 60 |
| Example 6 | - | - | 40 | - | 60 |

### Preparation Example 3. Manufacture of lithium secondarybattery (half-cell)

A positive electrode slurry was prepared by dispersing 90 wt% each of the positive electrode active materials prepared according to Preparation Example 1, 4.5 wt% of carbon black and 5.5 wt% of a PVDF binder in N-methyl-2 pyrrolidone (NMP). The positive slurry was uniformly applied on an aluminum thin film with a thickness of 15 µm and dried under vacuum at 135 °C, thereby manufacturing a positive electrode for a lithium secondary battery.

The positive electrode, lithium foil as a counter electrode, a porous polyethylene film (Celgard 2300, thickness: 25 µm) as a separator, and a liquid electrolyte prepared by adding LiPF₆ at 1.15M in a solvent in which ethylene carbonate, dimethyl carbonate and ethyl methyl carbonate were mixed in a volume ratio of 2:4:4 were used, thereby manufacturing a half-cell.

### Preparation Example 4. Manufacture of lithium secondary battery (full-cell)

A positive electrode slurry was prepared by dispersing 90 wt% each of the positive electrode active materials prepared according to Preparation Example 1, 4.5 wt% of carbon black and 5.5 wt% of a PVDF binder in N-methyl-2 pyrrolidone (NMP). The positive slurry was uniformly applied on an aluminum thin film with a thickness of 15 µm and dried under vacuum at 135 °C, thereby manufacturing a positive electrode for a lithium secondary battery.

The positive electrode, a graphite electrode as a counter electrode, a porous polyethylene film (Celgard 2300, thickness: 25 µm) as a separator, and a liquid electrolyte prepared by adding LiPF₆ at 1.15M in a solvent in which ethylene carbonate, dimethyl carbonate and ethyl methyl carbonate were mixed in a volume ratio of 2:4:4 were used, thereby manufacturing a full-cell.

### Experimental Example 1. XPS analysis of lithium manganese-based oxide

The lithium manganese-based oxides prepared according to Preparation Example 1-1 to Preparation Example 1-5 were subjected to XPS analysis to measure the content of a target element included in each lithium manganese-based oxide.

Specifically, using a XPS depth profile analysis method (Ion energy 2000eV, spot size 200 µm), a change in content of the target element from the surface portion to the central portion of the lithium manganese-based oxide (secondary particle) was measured while increasing an etching time for the surface of the lithium manganese-based oxide.

The XPS analysis results are shown in Tables 2 and 3 below.

**[Table 2]**

| Classification | | Target element | Content (at%) of target element of surface portion | Content (at%) of target element after 100-sec etching | Content (at%) of target element after 200-sec etching | Content (at%) of target element after 400-sec etching |
|---|---|---|---|---|---|---|
| First lithium manganese-based oxide | A-1 | Ni | 41 | 40 | 41 | 40 |
| | | Mn | 59 | 60 | 59 | 60 |
| | A-2 | Ni | 52 | 48 | 42 | 39 |
| | | Mn | 48 | 52 | 58 | 61 |
| | A-3 | Ni | 49 | 45 | 39 | 37 |
| | | Mn | 51 | 55 | 61 | 63 |
| Second lithium manganese-based oxide | B-1 | Ni | 40 | 42 | 40 | 41 |
| | | Mn | 60 | 58 | 60 | 59 |
| | B-2 | Ni | 40 | 41 | 41 | 41 |
| | | Mn | 60 | 59 | 59 | 59 |

| | | | | | | |
|---|---|---|---|---|---|---|
| * The content of target element (at%) is calculated based on all elements except lithium in the lithium manganese-based oxide. | | | | | | |

Referring to the results in Table 2, for A-2 and A-3, it can be confirmed that, in the preparation of the lithium manganese-based oxides, a gradient is formed in the form of increasing an Ni concentration and decreasing an Mn concentration from the central portion to the central portion according to precursor coating with Ni.

In addition, it can be confirmed that the nickel contents with respect to all transition metals present in the surface portions of A-2 and A-3 are larger than those of B-1 and B-2.

**[Table 3]**

| Classification | Target element | Content (at%) of target element of surface portion | Content (at%) of target element after 100-sec etching | Content (at%) of target element after 200-sec etching | Content (at%) of target element after 400-sec etching |
|---|---|---|---|---|---|
| A-1 | B | - | - | - | - |
| A-2 | B | - | - | - | - |
| A-3 | B | 38 | 12 | 3 | 0 |
| B-1 | B | - | - | - | - |
| B-2 | B | 41 | 9 | 1 | 0 |

| | | | | | |
|---|---|---|---|---|---|
| * The content of target element (at%) is calculated based on all elements except lithium in the lithium manganese-based oxide. | | | | | |

Referring to the results in Table 3, for A-3 and B-2, it can be confirmed that, in the preparation of the lithium manganese-based oxides, the content of a target element present in the surface portion is 20 at% or more according to the third thermal treatment (formation of a barrier layer). It is expected that that the content of a target element derived from a raw material used in the third thermal treatment on the surface portion of the lithium manganese-based oxide (secondary particle) is 20 at% or more because a barrier layer was formed in the surface portion of the lithium manganese-based oxide (secondary particle).

### Experimental Example 2. Measurement of press density of positive electrode active material

A press density was measured after compressing 3g each of the positive electrode active materials prepared in Preparation Example 2 under 4.5 tons for 5 seconds using a pelletizer.

The measurement results are shown in Table 4 below.

**[Table 4]**

| | |
|---|---|
| Pressure condition | 4.5 tons |
| Units | g/cc |
| Comparative Example 1 | 2.62 |
| Comparative Example 2 | 2.70 |
| Example 1 | 2.87 |
| Example 2 | 2.88 |
| Example3 | 2.88 |
| Example4 | 2.89 |
| Example5 | 2.87 |
| Example6 | 2.88 |

Referring to the results in Table 4, it can be confirmed that the 4.5-ton press densities for Examples 1 to 6, which represent bimodal-type positive electrode active materials in which the first lithium manganese-based oxide and the second lithium manganese-based oxide are mixed, are higher than those of Comparative Examples 1 and 2, relating to unimodal-type positive electrode active materials.

### Experimental Example 3. Evaluation of electrochemical properties of lithium secondary battery (half-cell)

According to charging/discharging experiments performed on each of the lithium secondary batteries (half-cells) manufactured in Preparation Example 3 using an electrochemical analyzer (Toyo, Toscat-3100) at 25 °C in a voltage range of 2.0V to 4.6V at a discharge rate of 0.1C to 5.0C, an initial discharge capacity, a capacity per volume, and a rate characteristic (rate capability (C-rate)).

The capacity per volume was calculated by multiplying the initial discharge capacity and the press density (4.5-ton press density in Table 4).

The measurement results are shown in Table 5.

**[Table 5]**

| Classification | Initial discharge capacity (0.1C-rate) | Capacity per unit volume | Rate capability (2C/0.1C) | Rate capability (5C/0.1C) |
|---|---|---|---|---|
| Units | mAh/g | mAh/cc | % | % |
| Comparative Example 1 | 225.3 | 590.3 | 74.5 | 67.9 |
| Comparative Example 2 | 225.0 | 607.5 | 78.8 | 68.1 |
| Example 1 | 225.4 | 646.9 | 77.9 | 68.2 |
| Example 2 | 226.4 | 652.1 | 79.3 | 69.0 |
| Example 3 | 230.5 | 663.8 | 80.1 | 70.3 |
| Example 4 | 231.2 | 668.3 | 79.8 | 71.6 |
| Example 5 | 232.6 | 667.4 | 81.6 | 72.2 |
| Example 6 | 236.4 | 680.9 | 82.8 | 73.7 |

Referring to the results of evaluating the half-cells in Table 5, it can be confirmed that the initial discharge capacities and rate characteristics of Examples 1 to 6, relating to the bimodal-type positive electrode active materials in which the first lithium manganese-based oxide and the second lithium manganese-based oxide are mixed, are improved compared to those of Comparative Example 1 and Comparative Example 2, relating to the unimodal-type positive electrode active materials.

Particularly, it can be confirmed that the capacities per unit volume of Examples 1 to 6, relating to the bimodal-type positive electrode active materials in which the first lithium manganese-based oxide and the second lithium manganese-based oxide are mixed, are greatly improved compared with those of Comparative Example 1 and Comparative Example 2, relating to the unimodal-type positive electrode active materials. In addition, comparing the results of Examples 1 to 6, it can be confirmed that, despite the similar press densities of the positive electrode active materials, the capacities per unit volume of Examples 2, and 3 to 6, and particularly, Examples 3 to 6, are larger than that of Example 1.

### Experimental Example 4. Evaluation of electrochemical properties of lithium secondary battery (full-cell)

For lithium secondary batteries (full-cells) manufactured according to Preparation Example 4 using the positive electrode active materials according to Examples 1 to 6, 6 cycles of formation were completed using an electrochemical analyzer (Toyo, Toscat-3100) at 25 °C in a voltage range of 2.0V to 4.6V under the condition of 0.2C/0.2C, and then 300 cycles of charging/discharging were performed at 25 °C in a voltage range of 2.0V to 4.6V under the condition of 1C/1C. The initial (1^{st} cycle) discharge capacity, and rate capabilities at the 100^{th} cycle, 300^{th} cycle and 500^{th} cycle with respect to the initial discharge capacity (capacity retention) were measured.

The measurement results are shown in Table 6 below.

**[Table 6]**

| Classification | Initial discharge capacity (mAh/g) | Capacity retention (%) | | |
|---|---|---|---|---|
| | | 100^{th} cycle | 300^{th} cycle | 500^{th} cycle |
| Example 1 | 181.7 | 76.2 | 37.3 | 19.6 |
| Example 6 | 202.6 | 93.7 | 87.1 | 82.2 |

Referring to the results of the full-cell evaluation in Table 6, in the case of Example 1, it can be confirmed that the capacity retention is lower than that of Example 6. This result is expected to be due to the abnormal resistance phenomenon of a negative electrode, which occurs by the release of a transition metal from the lithium manganese-based oxide, and thus the acceleration of deterioration in lifetime of a lithium secondary battery.

Accordingly, it can be confirmed that the positive electrode active material according to Example 6 is appropriate for a lithium secondary battery requiring a longer lifetime.

### Experimental Example 5. Experiment for release of transition metal

For the lithium secondary batteries (full-cells) manufactured in Preparation Example 4 using the positive electrode active materials according to Examples 1 and 6, after completing 6 cycles of formation using an electrochemical analyzer (Toyo, Toscat-3 100) at 25 °C in a voltage range of 2.0V to 4.6V under the condition of 0.2C/0.2C, the full-cells were charged/discharged for 2 cycles at 25 °C in a voltage range of 2.0V to 4.6V under the condition of 0.05C/0.05C and stabilized. Subsequently, after disintegration, the full-cells were washed with a diethyl carbonate solvent, and then dried at 60 °C under vacuum, followed by recovery.

Only a negative electrode active material was isolated from Cu foil (current collector) of the recovered negative electrode, the isolated negative electrode active material was subjected to ICP analysis to measure the contents of Ni and Mn included in the negative electrode active material.

In addition, for the lithium secondary batteries (full-cells) manufactured in Preparation Example 4 using the positive electrode active materials according to Examples 1 and 6, after completing 6 cycles of formation using an electrochemical analyzer (Toyo, Toscat-3100) at 25 °C in a voltage range of 2.0V to 4.6V under the condition of 0.2C/0.2C, the full-cells were charged/discharged for 500 cycles at 25 °C in a voltage range of 2.0V to 4.6V under the condition of 0.05C/0.05C. Subsequently, each full-cell was charged/discharged for 2 cycles at 25 °C in a voltage range of 2.0V to 4.6V under the condition of 0.05C/0.05C and stabilized. Subsequently, after disintegration, the full-cell was washed with a diethyl carbonate solvent, and then dried at 60 °C under vacuum, followed by recovery.

Only a negative electrode active material was isolated from Cu foil (current collector) of the recovered negative electrode, the isolated negative electrode active material was subjected to ICP analysis to measure the contents of Ni and Mn included in the negative electrode active material.

The measurement results are shown in Table 7.

**[Table 7]**

| | After formation | | After 500 cycles of charging/discharging | |
|---|---|---|---|---|
| Classification | Ni (ppm) | Mn (ppm) | Ni (ppm) | Mn (ppm) |
| Example 1 | 52 | 180 | 482 | 783 |
| Example 6 | 15 | 47 | 52 | 231 |

Referring to the result of Table 7, as expected in Experimental Example 4, it can be confirmed that the lower capacity retention of Example 1 compared to that of Example 6 is due to an increasing content of the transition metal deposited on the negative electrode active material after formation and/or after 500 cycles of charging/discharging.

According to the present invention, compared with a commercially-available ternary lithium composite oxide with a nickel-cobalt-manganese (NCM) or nickel-cobalt-aluminum (NCA) composition, it is possible to improve the limitations of the conventional overlithiated lithium manganese-based oxide, such as several disadvantages in terms of electrochemical properties and/or stability.

Specifically, according to the present invention, the low energy density per unit volume of an overlithiated lithium manganese-based oxide can be improved by preparing the lithium manganese-based oxide by dividing it into small and large particles and providing a bimodal-type positive electrode active material as a mixture of the small and larger particles.

In addition, according to the present invention, when small and/or large particles are formed as a core-shell particle having a concentration gradient of a transition metal, the content of a transition metal with a relatively low release possibility is allowed to be larger than those of other transition metals in a region corresponding to the shell, thereby inhibiting or migrating the release of a transition metal from the lithium manganese-based oxide.

As small and/or large particles are formed as a core-shell particle having a concentration gradient of a transition metal, the charge transfer and/or diffusivity (i.e., surface kinetics) of lithium ions on the surface of the lithium manganese-based oxide can be enhanced.

In addition, when the surface of the core-shell particle, that is, the surface of the shell, is covered with a barrier layer capable of inhibiting or mitigating the release of a transition metal from the core-shell particle, the release of a transition metal can be further inhibited or mitigated from small and/or large particles.

By inhibiting or mitigating the release of a transition metal from small and/or large particles, the formation of impurities by the reaction between the transition metal release from the surface of the lithium manganese-based oxide and a liquid electrolyte can be prevented.

A transition metal release from the lithium manganese-based oxide and/or impurities formed by the reaction between the released transition metal and a liquid electrolyte can move to a negative electrode using the liquid electrolyte as a medium, and a negative electrode resistance can rapidly increase by depositing the impurities on the surface of the negative electrode. Accordingly, as described in the present invention, it is necessary to limit the unintended movement of a transition metal in a lithium secondary battery.

That is, according to the present invention, as a barrier layer is formed on at least a part of the surface(s) of a small and/or large particle, the acceleration of lifetime deterioration of a lithium secondary battery can be prevented due to the deposition of impurities on a positive electrode and/or a negative electrode by the transition metal release from the lithium manganese-based oxide.

In addition, the barrier layer can serve as a physical barrier between the small and/or large particles and the liquid electrolyte. Particularly, OLO such as the lithium manganese-based oxide has an advantage of exhibiting high capacity in a high-voltage operating environment, and it is important to reduce side reactions between the lithium manganese-based oxide and the liquid electrolyte because the possibility of side reactions occurring between the lithium manganese-based oxide and the electrolyte can be promoted as the operating voltage increases.

Accordingly, as a barrier layer is formed on at least a part of the surface of small and/or large particles, the stability and lifetime of a lithium secondary battery using the bimodal-type positive electrode active material defined in the present invention can be enhanced by reducing side reactions between the lithium manganese-based oxide and the liquid electrolyte. Particularly, it is possible for a lithium secondary battery with a positive electrode active material having suppressed side reactions with a liquid electrolyte to be operated at a higher voltage.

In addition to the above effects, specific effects of the present invention will be described together while explaining specific details for carrying out the present invention.

In the above, the embodiments of the present invention have been described, but it will be understood by those of ordinary skill in the art that the present invention may be changed and modified in various ways by addition, alteration, or deletion of components without departing from the spirit of the present invention defined in the appended claims.

## Claims

1. Bimodal-type positive electrode active material comprising a first lithium manganese-based oxide and a second lithium manganese-based oxide, which have different average particle diameters,
wherein the difference in average particle diameter between the first lithium manganese-based oxide and the second lithium manganese-based oxide is 3 µm or more, and
the first lithium manganese-based oxide and the second lithium manganese-based oxide are oxides in which a phase belonging to a C2/m space group and a phase belonging to a R3-m space group are dissolved or complexed.

2. Bimodal-type positive electrode active material of claim 1, wherein the first lithium manganese-based oxide has an average particle diameter of 2 to 6 µm.

3. Bimodal-type positive electrode active material of claim 1, wherein the second lithium manganese-based oxide has an average particle diameter of 7 to 14 µm,

4. Bimodal-type positive electrode active material according to any one of the preceding claims, wherein the first lithium manganese-based oxide and the second lithium manganese-based oxide each independently comprise at least one selected from nickel, cobalt and manganese.

5. Bimodal-type positive electrode active material according to any one of the preceding claims, wherein the first lithium manganese-based oxide and the second lithium manganese-based oxide are each independently lithium manganese-based oxides comprising nickel and manganese, and
the content (mol%) of manganese with respect to all transition metals of the first lithium manganese-based oxide is smaller than that of the second lithium manganese-based oxide.

6. Bimodal-type positive electrode active material according to any one of the preceding claims, wherein the first lithium manganese-based oxide and the second lithium manganese-based oxide are each independently lithium manganese-based oxides comprising nickel and manganese, and
the content (mol%) of manganese with respect to all transition metals present in the surface portion of the first lithium manganese-based oxide is smaller than that of the second lithium manganese-based oxide.

7. Bimodal-type positive electrode active material according to any one of the preceding claims, wherein at least one of the first lithium manganese-based oxide and the second lithium manganese-based oxide is a core-shell particle having a concentration gradient of at least one selected from nickel and manganese from the central portion to the surface portion.

8. Bimodal-type positive electrode active material according to any one of the preceding claims, wherein the first lithium manganese-based oxide is a core-shell particle having a concentration gradient of at least one selected from nickel and manganese from the central portion to the surface portion, and
the second lithium manganese-based oxide is a particle having a concentration gradient having constant nickel and manganese concentrations, or a lower slope than the concentration gradient of the first lithium manganese-based oxide.

9. Bimodal-type positive electrode active material according to any one of the preceding claims, wherein the first lithium manganese-based oxide and the second lithium manganese-based oxide are each independently represented by Formula 1 below:
[Formula 1] Li(LiₐM1ₓM2_{y})O_{2-b}X_{b}
Wherein,
M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd and Nd, and M2 does not overlap with M1,
X is a halogen that can substitute for at least some of the oxygens present in the lithium manganese-based oxide,
0<a≤0.7, 0≤b≤0.1, 0<x≤1, 0≤y<1, and 0<x+y≤1.

10. Bimodal-type positive electrode active material according to any one of the preceding claims, wherein the first lithium manganese-based oxide and the second lithium manganese-based oxide are each independently represented by Formula 1-1 below:
[Formula 1-1] rLi₂MnO_{3-b"}X'_{b"}·(1-r)Li_{a'}M1_{x'}M2_{y'}O_{2-b'}X_{b'}
Wherein,
M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd and Nd, and M2 does not overlap with M1,
X and X' are halogens that can substitute for at least some of the oxygens present in the lithium manganese-based oxide,
0<r≤0.7, 0<a'≤1, 0≤b'≤0.1, 0≤b"≤0.1, 0<x'≤1, 0≤y'<1, and 0<x'+y'≤1.

11. Bimodal-type positive electrode active material according to any one of the preceding claims, wherein a barrier layer is present on at least a part of the surface of at least one of the first lithium manganese-based oxide and the second lithium manganese-based oxide.

12. Bimodal-type positive electrode active material according to any one of the preceding claims, wherein the first lithium manganese-based oxide is a core-shell particle having a concentration gradient of at least one selected from nickel and manganese from the core to the shell, and
a barrier layer is present on at least a part of the surface of the shell.

13. Bimodal-type positive electrode active material according to any one of the preceding claims, wherein the second lithium manganese-based oxide is a particle having a concentration gradient having constant nickel and manganese concentrations, or a lower slope than the concentration gradient of the first lithium manganese-based oxide, and
a barrier layer is present on at least a part of the surface of the second lithium manganese-based oxide.

14. Bimodal-type positive electrode active material according to any one of the preceding claims, wherein the barrier layer comprises an oxide comprising at least one selected from a metal element, a metalloid element and phosphorus (P).

15. Bimodal-type positive electrode active material according to any one of the preceding claims, wherein the barrier layer comprises at least one selected from a first oxide represented by Formula 2 below, a second oxide represented by Formula 3 below, and a third oxide represented by Formula 4 below:
[Formula 2] Li_{c}B_{d}M3ₑO_{f}
Wherein,
M3 is at least one selected from Ni, Mn, Co, Al, Nb, Si, Ti, Zr, Ba, K, Mo, Fe, Cu, Cr, Zn, Na, Ca, Mg, Pt, Au, Eu, Sm, W, Ce, V, Ta, Sn, Hf, Gd and Nd,
0≤c≤8, 0<d≤8, 0≤e≤8, and 2≤f≤13,
[Formula 3] Li_{g}M4ₕOᵢ
Wherein,
M4 is at least one selected from Ni, Mn, Co, Al, Nb, Si, Ti, Zr, Ba, K, Mo, Fe, Cu, Cr, Zn, Na, Ca, Mg, Pt, Au, Eu, Sm, W, Ce, V, Ta, Sn, Hf, Gd and Nd,
0≤g≤8, 0≤h≤8, 2≤i≤13, and the case in which g and h are 0 at the same time is excluded, and
[Formula 4] LiⱼM5ₖ(PₗOₘ)ₙ
Wherein,
M5 is at least one selected from Ni, Mn, Co, Al, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd and Nd,
0≤j≤10, 0≤k≤8, 0<l≤4, 0<m≤10, 0<n≤13, and the case in which j and k are 0 at the same time is excluded.
